Europäisches Patentamt

(19) European Patent Office

Office européen des brevets

(11) Publication number: 0 184 364
A2

## (12) EUROPEAN PATENT APPLICATION

(21) Application number: 85308538.9

(22) Date of filing: 25.11.85

(51) Int. Cl.⁴: **B 29 C 47/00**
C 09 J 7/00, B 26 F 1/26
//B29L7/00, B29K105:04,
B29K105:16

(30) Priority: 23.11.84 FI 844620

(43) Date of publication of application:
11.06.86 Bulletin 86/24

(84) Designated Contracting States:
BE CH DE FR GB IT LI NL SE

(71) Applicant: NESTE OY
Keilaniemi
SF-02150 Espoo 15(FI)

(72) Inventor: Laiho, Erkki
Kaivantotie 7
SF-06450 Porvoo 45(FI)

(72) Inventor: Turunen, Olli
Messeniuksenkatu 9 A 35
SF-00250 Helsinki(FI)

(74) Representative: Lamb, John Baxter et al,
Marks & Clerk 57/60 Lincoln's Inn Fields
London WC2A 3LS(GB)

(54) Procedure for producing a nonshrinkable gluing or coating film.

(57) The present invention concerns a procedure for producing a nonshrinkable gluing or coating film. The gluing or coating film (16) is placed on the surface to be glued or coated, or between different surfaces, and fixed thereto by fusing it with the aid of heat. The gluing or coating film (16) is produced by extruding, with the aid of a planar nozzle (11), hot-bonding plastic. The hot-bonding plastic contains 0.1 to 10% by weight of chemical and/or physical cell-generating agents, which gasify at the extrusion step and perforate the fluing or coating film (16) coming from the planar nozzle (11). For hot-bonding plastic is used a thermoplastic material, such as polyethylene, a copolymer of ethylene and vinyl acetate, or polypropylene.

M&C FOLIO: 799P51226          WANGDOC: 0304i

## PROCEDURE FOR PRODUCING A NONSHRINKABLE

## GLUING OR COATING FILM

The present invention concerns a procedure for producing a nonshrinkable gluing or coating film which is applied on the surface meant to be glued or coated, or between different surfaces, and is fixed thereto by fusing, with the aid of heat.

In most branches of industry, e.g. in the textile, packing and automobile industries, gluing or sealing films are used to join surfaces. Typically, such a "joining film" is activated with the aid of heat, whereby the film melts between the surfaces to be joined, or on the surface to be modified. Such gluing or coating films typically consist of thermoplastic resin which has been brought into film shape by the blowing method.

By reason of the manufacturing procedure, it has been necessary to use plastics with high melting pint. A further problem has been the shrinking of the film in connection with its fusing. Endeavours have been made to eliminate the latter detriment by mechanically perforating a film of this type.

The object of the invention is to achieve an improvement of existing procedures. The more detailed object of the invention is to achieve a procedure for making a nonshrinkable adhesion film of extrusible polymers.

The aim of the invention is attained by a procedure which is mainly characterized in that the gluing or coating film is made by extruding, with the aid of a planar nozzle, hot-bonding plastic containing between 0.1 and 10% by weight of chemical and/or physical cell-generating substances which gasify at the extrusion process and perforate the gluing or coating film coming from the planar nozzle.

As taught by claim 2, for hot-bonding plastic is used a thermoplastic material, e.g. polyethylene, a copolymer of ethylene and vinyl acetate, or polypropylene.

As taught by claim 3, the hot-bonding extrusible plastic contains a chemical foaming agent, such as 0.1 to 2% by weight of azodicarbamide, which produces holes in the gluing or coating film.

As taught by claim 4, the hot-bonding extrusible plastic contains water, which evaporates, thereby producing holes in the gluing or coating film.

As taught by claim 5, the water may be present, bound to calcium carbonate, talc, sodium bicarbonate, starch, calcium sulphate with crystal water, or mixtures of these.

As taught by claim 6, the perforated gluing or coating film coming from the extrusion process is immediately fixed on the surface to be treated, or it is wound on a roll for later use.

In the procedure of the invention, the hot-bonding plastics to be extruded are processed into film shape by the planar procedure. The perforation, which is not regular in this procedure, is obtained by using in the plastic an additive which forms gas at the extrusion step, its quantity being 0.1 to 10% by weight.

It is advantageous to use for hot-bonding plastic a thermoplastic, such as polyethylene, a copolymer of ethylene and vinyl acetate, or polypropylene. The hot-bonding plastic to be extruded contains a chemical foaming agent, such as azodicarbamide for instance, which makes holes in the film. The quantity of azodicarbamide is advantageously about 0.1 to 2% by weight.

The plastic to be extruded contains advantageously water, which evaporates under heat, thus forming holes in the film. The water may be present, bound e.g. to calcium carbonate, talc, sodium bicarbonate, starch, calcium sulphate with crystal water, or mixtures of these.

The perforated gluing or coating film coming from the extrusion step, manufactured by the procedure of the invention, may be immediately fixed on the surface to be treated, or it may be wound on a roll for later use.

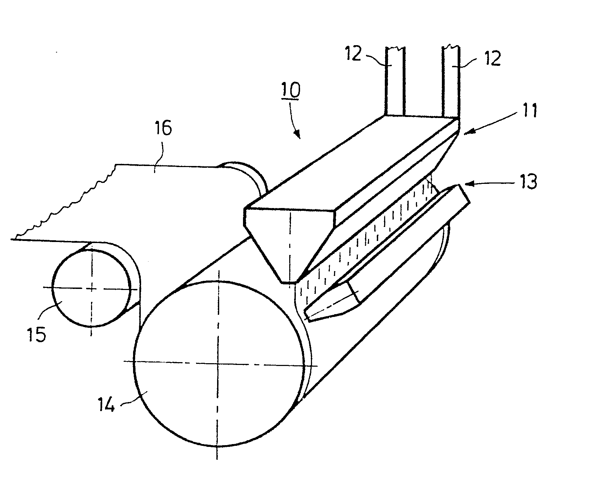

The invention shall be described in greater detail, referring to the principle design of an apparatus, presented in the figure of the attached drawing, intended for applying the procedure of the invention.

The figure in the drawing presents an advantageous embodiment of the apparatus intended for applying the procedure of the invention, in axonometric perspective.

In the embodiment depicted in the figure, the apparatus for applying the procedure of the invention, in general, has been indicated with reference numberal 10. In this embodiment, the apparatus 10 comprises a planar nozzle 11, an air brush 13 and a cooling roll 14. The reference numeral 12 indicates feed tubes through which the molten plastic and the foaming agent are conducted to the planar nozzle 11. The reference numeral 15 indicates a guide roll, and 16 indicates the completed gluing or coating film.

The molten plastic undergoing the perforation process is with the aid of the air brush 13 urged against the cooling roll 14. The completed film 16 is further wound upon a roll. It is possible with the same apparatus 10 to deposit the gluing film 16 directly, in molten condition, upon the surface to be glued, which is conducted, advantageously in web form, past under the nozzle 11 (unreeling – coating – reeling on a roll).

For producing the film, one may use conventional commercial low density polyethylene (e.g. film quality, melt index = 4 g per 10 min., ASTM D 1238, and density 922 $kg/m^3$, ASTM D 1505), to which has been admixed 0.1 to 2% by weight of azodicarbamide. The temperature of the molten plastic is advantageously 240-280°C. The hole size and distribution are indefinite. The size and number of holes increase with increasing foaming agent content.

CLAIMS:-

1. Procedure for producing a nonshrinkable gluing or coating film, said gluing or coating film (16) being placed on the surface to be glued or coated, or between different surfaces, and being fixed thereto by fusing it with the aid of heat, characterized in that the gluing or coating film (16) is made by extruding, with the aid of a planar nozzle (11), a hot-bonding plastic containing 0.1 to 10% by weight of chemical and/or physical cell-generating substances which are gasified at the extrusion process and perforate the gluing or coating film (16) coming from the planar nozzle (11).

2. Procedure according to claim 1, characterized in that for hot-bonding plastic is used a thermoplastic, such as polyethylene, a copolymer of ethylene and vinyl acetate, or polypropylene.

3. Procedure according to claim 1 or 2, characterized in that the hot-bonding plastic to be extruded contains chemical foaming agent, such as 0.1 to 2% by weight of azodicarbamide, which makes holes in the gluing or coating film.

4. Procedure according to claim 1 or 2, characterized in that the hot-bonding plastic to be extruded contains water, which evaporates, forming holes in the gluing or coating film (16).

5.   Procedure according to claim 4, characterized in that the water is present, bound to calcium carbonate, talc, sodium bicarbonate, starch, calcium sulphate with crystal waer or to mixtures of these.

6.   Procedure according to any one of claims 1 to 5, characterized in tht the perforated gluing or coating film coming from extrusion is immediately fixed on the surface to be treated or is wound on a roll for later use.